# EUROPÄISCHE PATENTSCHRIFT

(11) **EP 4 584 628 B1**
(45) Veröffentlichungstag und Bekanntmachung des Hinweises auf die Patenterteilung: **02.12.2026**
(21) Anmeldenummer: 23751949.1
(22) Anmeldetag: 03.08.2023
(51) Int. Cl.: G02B 27/01

(54) **ANORDNUNG ZUR AUFLADUNG EINER DATENBRILLE, SOWIE DATENBRILLE UND LADEEINRICHTUNG**
ARRANGEMENT FOR CHARGING DATA GLASSES, AS WELL AS DATA GLASSES AND CHARGING DEVICE
AGENCEMENT POUR CHARGER DES LUNETTES DE DONNÉES, AINSI QUE LUNETTES DE DONNÉES ET DISPOSITIF DE CHARGE

(30) Priorität: 06.09.2022 DE 102022122626
(43) Veröffentlichungstag der Anmeldung: 16.07.2025
(73) Patentinhaber: Bayerische Motoren Werke Aktiengesellschaft, 80809 München (DE)
(72) Erfinder: HOFFMANN, Philipp, 30539 Hannover (DE); MAJOR, Zoltan, 80939 München (DE)
(86) Internationale Anmeldenummer: PCT/EP2023/071510
(87) Internationale Veröffentlichungsnummer: WO 2024/052014

(56) Entgegenhaltungen:
- CN-U- 212 647 161
- CN-U- 215 986 785
- JP-A- 2012 005 189

## Beschreibung

Die Erfindung betrifft eine Datenbrille, eine Ladeeinrichtung sowie eine Anordnung umfassend eine solche Datenbrille und eine solche Ladeeinrichtung.

Im Stand der Technik sind diverse Datenbrillen zur Anzeige eines Bildes im Sichtfeld eines Nutzers, auch Augmented-Reality-Brille, nachfolgend kurz AR-Brille genannt, bekannt.

Beispielsweise ist aus der CN113848650A eine AR-Brille bekannt. Die aus dem Stand der Technik bekannten AR-Brillen werden zum Aufladen meist per Kabel verbunden, wobei die AR-Brillen eine Aufnahmebuchse zur Aufnahme eines Steckers eines Ladekabels aufweisen.

Darüber hinaus ist aus der DE 10 2021 108 116 A1 eine Haltevorrichtung, die eine elektrisch ladende Aufnahmeeinrichtung zum Aufnehmen einer AR-Brille zum induktiven Aufladen aufweist, bekannt.

Bei induktiver Aufladung von AR-Brillen ist eine genaue Positionierung notwendig, um einen ausreichend hohen Ladestrom zu erreichen. Bei kabelgebunden Ladesystemen muss die AR-Brille händisch mit dem Ladekabel verbunden werden.

Die Druckschrift CN 212 647 161 U offenbart eine Ladevorrichtung für intelligente Brillen, die eine Basis, eine Ladebasisträgerstruktur, die auf der Oberseite der Basis angeordnet ist, und von der Oberseite der Basis vorsteht und die fest auf der Basis und/oder dem Ladebasisträger installiert ist, und einen Ladechip in dem von der Struktur eingeschlossenen Hohlraum umfasst, der mit Ladevorrichtungsleitungsteilen versehen ist, die elektrisch mit dem Ladechip auf der Oberseite der Ladeständerstützstruktur verbunden sind. Weiterhin ist eine intelligente Brille offenbart, die einen Brillenhauptkörper, einen ersten Bügel und einen zweiten Bügel, die jeweils an gegenüberliegenden Seiten des Brillenhauptkörpers verbunden sind, eine Batterie und eine Hauptplatine, die elektrisch mit der Batterie verbunden ist, umfasst, wobei ein Nasenpolsterabschnitt an der Mittelachse der unteren Seite des Brillenhauptkörpers vorgesehen ist und ein Brillenladeabschnitt, der elektrisch mit der Hauptplatine verbunden ist, an dem Nasenpolsterabschnitt vorgesehen ist. Der Brillenladeteil kann mit drei Teilen vorgesehen sein, nämlich dem ersten Ladeteil der Brille, der auf der Mittelachse des Nasenpolsters angeordnet ist. Die beiden zweiten Ladeteile der Brille sind auf gegenüberliegenden Seiten des ersten Ladeteils angeordnet. Das erste Ladeteil der Brille und das zweite Ladeteil der Brille sind als leitende Metallplatten oder federartige Kontaktstifte ausgebildet.

Die Druckschrift CN 215 986 785 U offenbart eine intelligente Brille, umfassend ein Brillengestell, wobei das Brillengestell zwei Spiegelringe zum Einsetzen von Linsen und ein Nasenpolster, das die beiden Spiegelringe verbindet, aufweist; zwei Ladestifte, die jeweils an der Innenseite des Nasenpolsters angeordnet sind. Es sind magnetische Anziehungskörper auf dem Nasenpolster und in der Nähe des Ladestifts angeordnet, um mit dem magnetischen Körper im Brillengehäuse zu wechselwirken.

Die Druckschrift JP 2012 005189 A offenbart eine Ladevorrichtung, die elektronische Brillen mit einer eingebauten Sekundärbatterie mit Strom versorgt. Dazu ist eine Stromübertragungsspule, die eine in der elektronischen Brille vorgesehene Stromempfangsspule berührungslos mit Strom versorgt, vorgesehen. Eine elektronische Brille kann an einer vorbestimmten Position angebracht werden. Es ist eine Ladevorrichtung mit einer Positioniereinrichtung zum Anbringen der Stromspule vorgesehen, wobei die Stromübertragungsspule um einen ersten Kern gewickelt ist und die Stromempfangsspule um einen zweiten Kern gewickelt ist.

Eine Aufgabe der Erfindung besteht darin, eine einfache Kopplung einer Datenbrille mit einer Ladeeinrichtung zu gewährleisten.

Die Aufgabe wird gelöst durch eine Datenbrille gemäß dem unabhängigen Anspruch 1 sowie eine Anordnung aus einer solchen Datenbrille und einer Ladeeinrichtung gemäß den abhängigen Ansprüchen 8-14. Vorteilhafte Weiterbildungen der Datenbrille sind Gegenstand der abhängigen Anspüche 2-7.

Gemäß einem ersten Aspekt ist eine Datenbrille zum Anzeigen eines virtuellen Bildes im Sichtfeld eines Nutzers vorgesehen, umfassend mindestens einen elektrischen Energiespeicher zur elektrischen Stromversorgung der Datenbrille, ein oder mehrere mit dem Energiespeicher verbundene elektrisch leitende Kontaktbereiche zur Kontaktierung mit einer Ladeeinrichtung, mindestens eine Nasenauflage mit ein oder mehreren nicht-leitenden Auflagebereichen zur Abstützung der Datenbrille auf einer Nase des Nutzers, wobei die Kontaktbereiche auf der Nasenauflage angeordnet sind, wobei die nicht-leitenden Auflagebereiche relativ zur den elektrische leitenden Kontaktbereichen hervorstehend ausgebildet sind.

Unter hervorstehend wird verstanden, dass die Auflagebereiche aus Sicht der Ebene der Kontaktbereiche herausragt bzw. dass die Kontaktbereiche analog aus Sicht der Auflagebereiche zurückliegend angeordnet sind.

Dadurch wird erreicht, dass die Kontaktfläche der Kontaktbereiche beim Tragen der Brille nicht in Kontakt mit der Nase des Nutzers kommen, so dass ggfs. Strom abfließen und damit der Energiespeicher, der insbesondere in Form einer aufladbaren Batterie ausgebildet sein kann, entladen werden kann. Weiterhin kann der Kontakt von metallischen Kontaktflächen mit der Haut zu unerwünschten Hautreaktionen führen. Die herausragenden nicht-leitenden Auflagebereiche dienen demnach als Abstandshalter zur Nase des Nutzers.

Die Erfindung beruht auf dem Gedanken, dass jede Brille und demnach auch AR-Brillen über eine Nasenauflage verfügt, um die Brille auf der Nase eines Nutzers abstützen zu können. Die Nasenauflage soll als Empfänger bzw. Kontakt für einen Ladestrom eines Ladegeräts dienen, dazu sind zusätzlich zu nicht-leitenden Auflagebereichen elektrisch leitende Kontaktbereiche zur Kontaktierung einer Ladeeinrichtung auf der Nasenauflage vorgesehen.

In einer bevorzugten Ausführungsform der Datenbrille stehen die Auflagebereiche mindestens um 0,2 mm, vorzugsweise um mindestens 0,5 mm, relativ zu den Kontaktbereichen hervor.

Dadurch, dass die Nasenauflage bzw. die nicht-leitende Auflagebereiche flächig auf der Nase des Nutzers aufliegt, wird stets ein Abstand zu den Kontaktbereichen realisiert.

In einer weiter bevorzugten Ausführungsform der Datenbrille können die Kontaktbereiche voneinander beabstandet und durch die Auflagebereiche voneinander getrennt sein.

Dadurch, dass die Kontaktbereiche durch die nicht-leitenden Auflagebereiche voneinander getrennt werden, wird erreicht, dass die Auflagebereiche auch zwischen den Kontaktbereichen als Abstandshalter zur Nase des Nutzers fungiert.

Besonders bevorzugt ist es, wenn die Auflagebereiche eckig, vorzugsweise sechseckig, weiter vorzugsweise wabenförmig, ausgebildet und die Kontaktbereiche in den Zwischenräumen angeordnet sind.

Durch die Anordnung der Kontaktbereiche in den Zwischenräumen kann erreicht werden, dass der Abstand zwischen den Kontakten stets konstant bleibt. Bei einer wabenförmigen Anordnung kann die zur Verfügung stehende Fläche optimal ausgenutzt werden und die Zwischenwände bzw. die Auflagebereiche der Nasenauflage haben eine höhere Stabilität.

Weiter bevorzugt bestehen die Auflagebereiche aus Kunststoff, vorzugsweise Silikon, und die Kontaktbereiche sind mit einem metallischen Material ausgebildet, das Kupfer, Silber oder Gold enthalten kann.

Kunststoffe eignen sich aufgrund ihrer nicht-leitenden Eigenschaft gut als Auflagebereiche bzw. Zwischenwände. Zudem haben sich Kunststoffe oder Silikone als Material für Nasenauflagen durchgesetzt, da diese Materialien ein angenehmeren Tragekomfort bei Brillen bzw. AR-Brillen bieten und keine Hautreaktionen verursachen können.

Ferner ist es in einer Weiterbildung der Datenbrille bevorzugt, dass der Abstand der Kontaktbereiche zueinander mindestens 0,2 mm, vorzugsweise mindestens 0,5 mm, umfasst und/oder die Auflagebereiche zwischen den Kontaktbereichen eine Breite von maximal 1,5 mm, vorzugsweise 1 mm, umfassen.

Weiterhin ist es bevorzugt, wenn die Kontaktbereiche biegbar sind und sich bei Kontaktierung orthogonal zur Kontaktfläche verbiegen oder entsprechend flexibel gelagert sind.

Die Kontaktbereiche können so dimensioniert sein, dass sie bei Auflage auf einer Ladeeinrichtung und damit bei Kontaktierung mit Ladekontakten durch das Gewicht der Brille belastet werden, so dass sie sich, vorzugsweise orthogonal zur Kontaktfläche, verbiegen oder senkrecht zur Kontaktfläche ausgelenkt werden. Dadurch wird eine verbesserte Kontaktierung erreicht.

Bei starren, nicht biegbaren, Kontaktbereichen würde ein Kontaktbereich, der durch Verschleiß oder bedingt durch Fertigungstoleranzen weiter als die übrigen Kontaktbereiche hervorsteht, die übrigen Kontaktbereiche von einer Kontaktierung abhalten, so dass nur der hervorstehende Kontaktbereich mit den Ladekontakten in Berührung kommt. Dies hätte zur Folge, dass die Brille bzw. dessen Energiespeicher nur über diese eine Verbindung geladen werden könnte, wodurch sich ein geringerer Ladestrom und damit eine erhöhte Ladezeit ergeben würde.

Zwar ist eine Kontaktierung durch einen einzigen Kontaktbereich ebenfalls möglich, allerdings kann dieser Nachteil beispielsweise verhindert werden, indem der Kontaktbereich nachgiebig ist und sich durch das geringe Gewicht der Datenbrille verbiegen lässt. Steht ein Kontaktbereich durch Verschleiß oder Fertigungstoleranzen hervor, so verbiegt sich dieser Kontaktbereich, so dass die restlichen Kontaktbereiche ebenfalls mit den Ladekontakten der Ladeeinrichtung in Berührung kommen können. Somit könnte ein sicherer Formschluss der Ladekontakte mit den Kontaktbereichen der Brille erreicht werden.

Weiterhin kann eine Ladeeinrichtung zur konduktiven Aufladung einer Datenbrille vorgesehen sein, umfassend eine Anlagefläche zur Aufnahme einer Nasenauflage der Datenbrille, elektrisch leitende Ladekontakte zur Kontaktierung der Kontaktbereiche der Datenbrille, wobei die Ladekontakte auf der Anlagefläche angeordnet sind, wobei die Ladekontakte relativ zur Anlagefläche hervorstehend ausgebildet sind.

Dadurch, dass die Ladekontakte hervorstehend ausgebildet sind, kann bei Auflage der Datenbrille eine Kontaktierung mit den Kontaktbereichen hergestellt werden. Die hervorstehenden Ladekontakte können dabei hervorstehende Pins oder säulenförmige Stifte sein.

Üblicherweise verfügen Nasenauflagen von Datenbrillen über zwei sich gegenüberliegende Auflageflächen mit Auflagebereichen. Daher kann die Ladeeinrichtung ebenfalls über zwei Anlageflächen verfügen, so dass jede der Auflageflächen einer Nasenauflage im Ladezustand an einer eigenen Anlagefläche mit hervorstehenden Ladekontakten anliegt. Dadurch kann erreicht werden, dass Datenbrillen, die nur auf einer Auflagefläche über Kontaktbereiche zum Laden verfügen, unabhängig von ihrer Anordnung geladen werden können.

**In** einer weiter bevorzugten Ausführungsform sind die Ladekontakte zueinander beabstandet und durch die Anlagefläche getrennt angeordnet, wobei der Abstand der Ladekontakte zueinander höchstens 0,5 mm, vorzugsweise 3 mm, und/oder die Breite der Anlagefläche zwischen den Ladekontakten maximal 0,5 mm, vorzugsweise 3 mm, umfasst.

Der Abstand der Ladekontakte zueinander kann geringer als der Abstand der Kontaktbereiche der Datenbrille sein, gleichzeitig können die Ladekontakte in ihrem Querschnitt (quer zur Erstreckungsrichtung bzw. in Flächenrichtung der Anlagefläche) kleiner als die Kontaktbereiche der Datenbrille sein, so dass stets ein Kontakt zwischen den beiden erreicht werden kann, unabhängig von der Positionierung der Datenbrille auf der Ladeeinrichtung.

Die der Erfindung zugrunde liegende Aufgabe wird des Weiteren gelöst durch eine Anordnung mit einer erfindungsgemäßen Datenbrille und einer erfindungsgemäßen Ladeeinrichtung.

Weiterhin kann die Anzahl der Ladekontakte größer sein als die Anzahl der Kontaktbereiche der Datenbrille.

Die Ladekontakte können bezüglich ihrer Anordnungsrichtung (Flächenrichtung der Anlagefläche) eine höhere Periodizität aufweisen, als die Kontaktbereiche der Datenbrille bezüglich ihrer Anordnungsrichtung (Flächenrichtung des Auflagebereichs). Weiterhin kann die Ladefläche bzw. der Anlagefläche der Ladeeinrichtung, auf der die Datenbrille platziert werden kann, wesentlich größer sein kann als die Fläche der Nasenauflage bzw. des Auflagebereichs der Datenbrille. Dadurch kann erreicht werden, dass keine exakte Positionierung der Datenbrille auf der Ladeeinrichtung notwendig ist, um eine konduktive Verbindung der Ladekontakte mit den Kontaktbereichen der Datenbrille herzustellen.

Weiter bevorzugt kann die Querschnittsfläche der Ladekontakte kleiner sein als die Fläche der Kontaktbereiche der Datenbrille.

Weiterhin kann es bevorzugt sein, wenn der Abstand der Ladekontakte kleiner ist als der Abstand der Kontaktbereiche der Datenbrille.

Dadurch kann sichergestellt werden, dass die Ladekontakte mit den Kontaktbereichen der Datenbrille verbunden werden können, da die Ladekontakte zwischen die Auflagebereiche bzw. zwischen die Wabenwände hindurch bis zu den Kontaktbereichen treten können. Die Höhe der herausragenden Ladekontakte ist dabei so gewählt, dass sie den Abstand der Auflagebereiche bzw. der Wabenwände überwinden und die Kontaktbereiche der Datenbrille kontaktieren können.

Besonders bevorzugt kann die Höhe der herausragenden Ladekontakte, vorzugsweise um 0,1 - 0,9 mm, größer als die Höhe der herausragenden Auflagebereiche der Datenbrille sein.

Unter der Höhe der herausragenden Ladekontakte ist der Abstand der Ladekontakte von ihrem distalen Ende bis zur Anlagefläche der Ladeeinrichtung zu verstehen.

Die Größe des Höhenunterschiedes der Höhe der herausragenden Ladekontakte relativ zur Höhe der herausragenden Auflagebereiche bzw. der Zwischenwände der Datenbrille gewährleistet eine sichere Kontaktierung, wobei ein bereits geringer Höhenunterschied ausreicht, um die Ladekontakte mit den Kontaktbereichen der Datenbrille zu verbinden.

Die Ladeeinrichtung oder die Ladekontakte können darüber hinaus federnd gelagert werden, d.h. selbst federelastisch sein und/oder über ein Dämpfungs- oder Federelement verfügen, um das Gewicht der Datenbrille bei Auflage auf der Ladeeinrichtung zu kompensieren bzw. die Kräfte, die dabei wirken, aufzunehmen. Dadurch kann ein Verschleiß der Ladekontakte verhindert werden. Alternativ kann auch die Nasenauflage der Datenbrille federnd gelagert sein, d.h. über ein Dämpfungs- oder Federelement verfügen, welches die Kräfte aufnimmt.

Weiter bevorzugt kann die Anlagefläche der Ladeeinrichtung formkomplementär zum Auflagebereich bzw. der Auflagefläche der Nasenauflage der Datenbrille ausgeformt sein.

Durch eine formkomplementäre Anlagefläche können die Auflagebereiche der Nasenauflage der Datenbrille vollflächig auf der Anlagefläche aufliegen. Dadurch können mehrere der Ladekontakte der Ladeeinrichtung in Kontakt mit den Kontaktbereichen der Datenbrille treten. Ebenfalls kann dadurch ein sicherer Halt der Datenbrille auf der Ladeeinrichtung erreicht werden.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird.

Es zeigen:
- Figur 1:: eine schematische, perspektivische Darstellung einer erfindungsgemäßen Datenbrille;
- Figur 2:: eine schematische Detaildarstellung der Kontaktfläche der Nasenauflage einer erfindungsgemäßen Datenbrille;
- Figur 3:: eine schematische, perspektivische Darstellung einer erfindungsgemäßen Ladeeinrichtung;
- Figur 4:: eine schematische Schnittdarstellung einer erfindungsgemäßen Ladeeinrichtung;
- Figur 5:: eine schematische, perspektivische Darstellung einer erfindungsgemäßen Anordnung;
- Figur 6:: eine schematische, perspektivische Seitenansicht einer erfindungsgemäßen Anordnung;
- Figur 7a, 7b:: eine schematische Detailansicht einer erfindungsgemäßen Anordnung;

In den Zeichnungen sind jeweils gleiche oder gleichartige Elemente und/oder Teile mit denselben Bezugsziffern versehen, so dass von einer erneuten Vorstellung jeweils abgesehen wird.

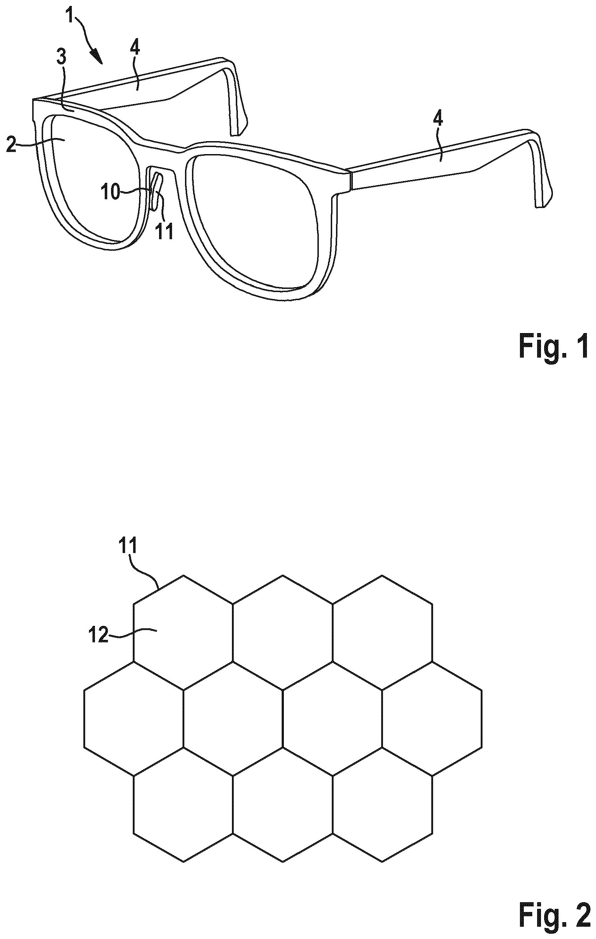

Figur 1 zeigt schematisch eine erfindungsgemäße Datenbrille 1. Die Datenbrille 1 ist als Augmented Reality Datenbrille ausgebildet und umfasst mindestens ein Brillenglas 2 welches als Projektionsfläche für ein im Sichtfeld des Nutzers anzuzeigende Bild dient. Das mindestens eine Brillenglas 2 ist in einen Rahmen 3 eingefasst, welcher mit mindestens einem Bügel 4 zur Fixierung der Datenbrille 1 auf dem Kopf eines Nutzers verbunden ist. Üblicherweise sind zwei Bügel 4 an jeder Seite der Datenbrille 1 vorgesehen. Elektrische Energie wird der Datenbrille durch eine aufladbare Batterie 5 bereitgestellt, die beispielsweise in einem der Bügel 4 angeordnet sein kann. Zur stützenden Auflage auf der Nase des Nutzers ist eine Nasenauflage 10 vorgesehen.

Die Nasenauflage 10 kann als separates Element mit dem Rahmen 3 über ein Verbindungselement verbunden sein oder integral im Rahmen 3 ausgeformt sein. Die Nasenauflage 10 kann dabei in zweifacher Form vorhanden sein, wobei sich die beiden Nasenauflagen 10 an jeweils einer Innenseite eines Brillenglases 2 befinden und mit dem Rahmen 3 verbunden sind. Darüber hinaus umfasst die Nasenauflage 10 Auflagebereiche 11, die bei flächigem Aufliegen auf der Nase des Nutzers die Datenbrille 1 in einer gewünschten Position am Kopf des Nutzers halten.

Fig. 2 zeigt schematisch eine Detailansicht einer Kontaktfläche der Nasenauflage 10, wobei die Kontaktfläche die Auflagenbereiche 11 und Kontaktbereiche 12 umfasst. Die Kontaktbereiche 12 sind voneinander beabstandet und durch die Auflagebereiche 11 zumindest teilweise voneinander getrennt. In dieser Ausführungsform sind die Kontaktbereiche 12 und die Auflagebereiche 11 wabenförmig ausgeführt, wobei die Auflagebereiche 11 als Wabenwand fungiert und die Kontaktbereiche 12 in den Zwischenräumen der so gebildeten Waben angeordnet sind.

Selbstredend sind auch andere Anordnungen denkbar, wobei sich eine zumindest eckige Anordnung bewährt hat, da die Auflagebereiche 11 zwischen zwei Kontaktbereichen 12 als eine Wand ausgeführt sind. Somit ergibt sich eine optimale Verteilung der Kontaktbereiche 12 über die gesamte Kontaktfläche.

Die in den Zwischenräumen angeordneten Kontaktbereiche 12 sind elektrisch leitfähig und aus einem metallischen Material vorzugsweise mit Kupfer, Silber oder Gold, ausgebildet. Diese Materialien sind aufgrund ihrer guten elektrischen Leitfähigkeit besonders geeignet.

Die Kontaktbereiche stehen in geeigneter Weise mit der Batterie 5 in elektrischer Verbindung, so dass diese durch jeweilige Kontaktierung der Kontaktflächen der Nasenauflagen 10 aufgeladen werden können.

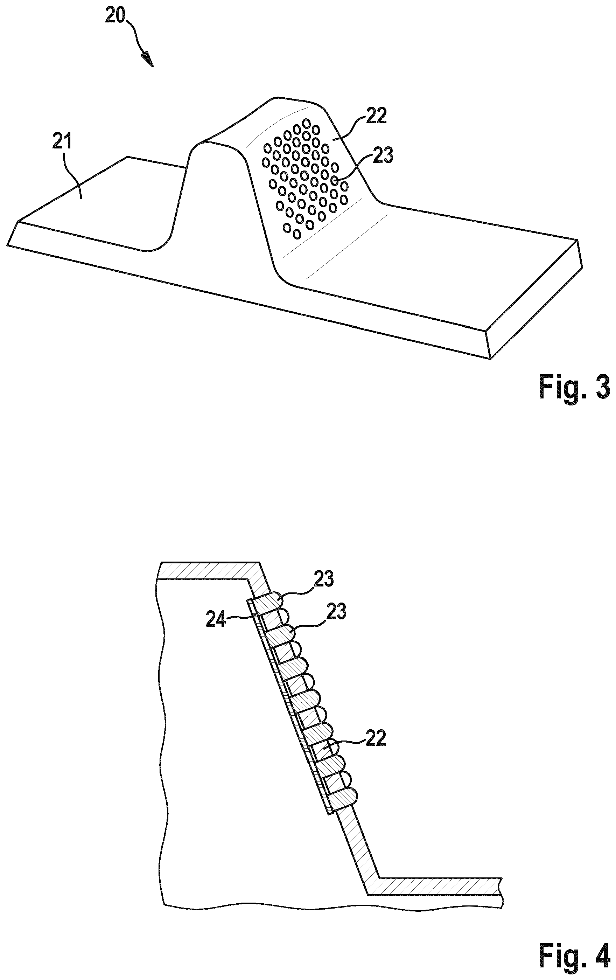

Darüber hinaus können die Kontaktbereiche 12 als biegsame oder flexibel oder federelastisch gelagerte Kontaktflächen ausgebildet sein, die bei Kontaktierung mit den Ladekontakten 23 der Ladeeinrichtung 20 (siehe Figur 3) nachgeben, sich also orthogonal zur Kontaktfläche verbiegen.

Die Auflagebereiche 11 dienen neben der Funktion der Wabenwand auch als Isolator, weshalb sie aus einem nicht leitfähigen Material, beispielsweise aus Kunststoff, vorzugsweise Silikon, besteht.

Fig. 3 zeigt schematisch ein erfindungsgemäße Ladeeinrichtung 20. Die Ladeeinrichtung 20 umfasst optional einen Standfuß 21 zur Erhöhung der Stabilität im aufgestellten Zustand. Weiterhin umfasst die Ladeeinrichtung 20 zur Nasenauflage korrespondierende Auflagebereiche 22, wobei die Auflagebereiche 22 die Kontur einer Nase eines Nutzers nachbildend ausgeformt sein können.

Zum konduktiven Laden einer Datenbrille 1 umfasst die Ladeeinrichtung 20 im Bereich der Auflagebereiche 22 elektrisch leitende Ladekontakte 23. Die Anzahl der Ladekontakte 23 übersteigt die Anzahl der Kontaktbereiche 12 der Datenbrille 1, um eine sichere Aufladung auch bei ungenauer Positionierung sicherzustellen. Erfindungsgemäß ist der Umfang und/oder die Fläche der Ladekontakte 23 dabei geringer als der Umfang und/oder die Fläche der Kontaktbereiche 12 der Datenbrille 1.

Figur 4 zeigt schematisch eine Schnittdarstellung der Ladeeinrichtung 20, wobei die Ladekontakte 23 relativ zur Auflagebereiche 22 hervorstehend angeordnet sind. Die Ladekontakte 23 sind durch die Auflagebereiche 22 voneinander getrennt und isoliert angeordnet und über ein Brückenelement 24 miteinander verbunden.

Darüber hinaus kann die Ladeeinrichtung 20 ein nicht abgebildetes Kabel mit einem Stecker zur Verbindung mit einer Steckdose oder einem Netzteil zur elektrischen Stromversorgung der Ladeeinrichtung 20 umfassen.

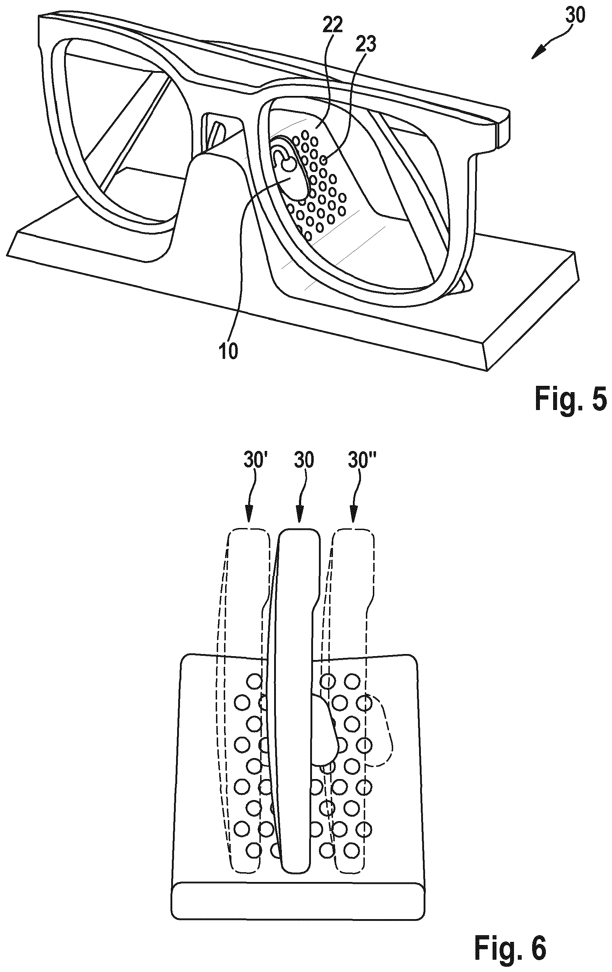

Figur 5 zeigt schematisch eine Anordnung 30 mit der Datenbrille 1 und einer Ladeeinrichtung 20. Um die Datenbrille 1 mit der Ladeeinrichtung 20 zu verbinden und die Batterie 5 der Datenbrille 1 aufzuladen, wird sie so auf der Ladeeinrichtung 20 platziert, dass die Nasenauflage 10 auf der Anlagefläche 22 aufliegt. Zumindest ein Teil der hervorstehenden Ladekontakte 23 treffen auf zumindest einen Teil der Kontaktbereiche 12, wodurch die Batterie 5 konduktiv geladen werden kann.

Figur 6 zeigt schematisch eine Seitenansicht der erfindungsgemäßen Anordnung 30 mit unterschiedlichen Positionierungen einer erfindungsgemäßen Datenbrille 1 auf einer erfindungsgemäßen Ladeeinrichtung 20. Dabei sind neben einer ersten Anordnung 30, bei der die Datenbrille 1 in zentraler Position auf der Ladeeinrichtung 20 gezeigt ist, noch eine weitere Anordnung 30' gezeigt, bei der die Datenbrille 1 im vorderen Bereich der Ladeeinrichtung 20 angeordnet ist.

Eine weitere Anordnung 30" ist abgebildet, bei der die Datenbrille 1 im hinteren Bereich der Ladeeinrichtung 20 angeordnet ist. In jeder der gezeigten Anordnungen 30, 30', 30" ist die Datenbrille 1 so positioniert, dass deren Nasenauflagen 10 und damit die Kontaktbereiche 12 mit mindestens einem, vorzugsweise mehreren, Ladekontakten 23 in Verbindung stehen.

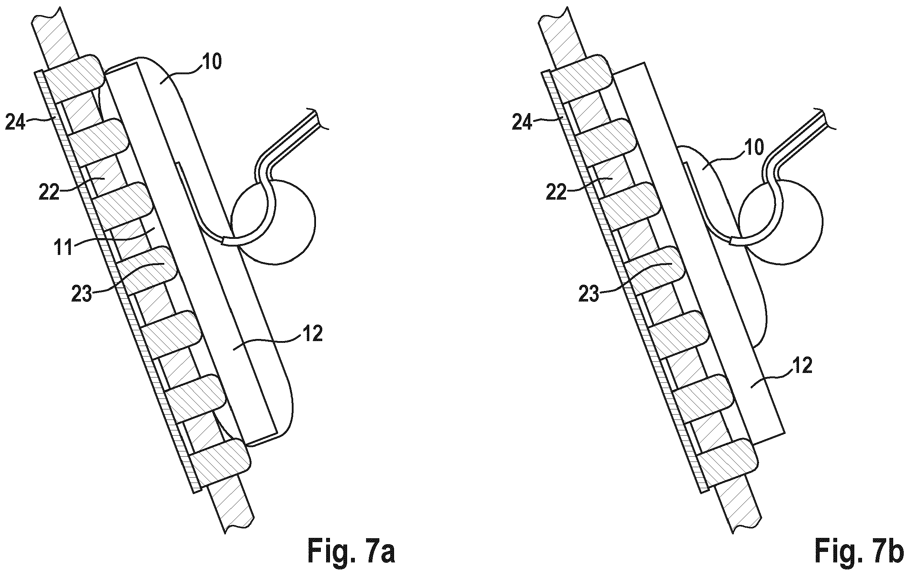

Figur 7a, und 7b zeigen schematisch eine Detailansicht einer erfindungsgemäßen Anordnung 30, wobei in Figur 7a eine Nasenauflage 10 mit einer Auflagebereiche 11 und Kontakten 12 gemäß Figur 2 gezeigt ist. Es ist zu sehen, dass die Höhe der herausragenden Ladekontakte 23 der erfindungsgemäßen Ladeeinrichtung 20 gerade ausreicht, um die Höhe bzw. den Abstand zwischen der herausragenden Auflagebereiche 11 und den Kontaktbereichen 12 der erfindungsgemäßen Datenbrille 1 zu überwinden und die Kontaktbereiche 12 zu kontaktieren. Da die Kontaktbereiche 12 eine biegsame oder flexible oder federelastische Kontaktfläche aufweisen, können mehrere der Ladekontakte 23 mit den Kontakten 12 verbunden werden, selbst wenn diese aufgrund einer ungenauen Positionierung nicht exakt parallel zueinander verlaufen.

Figur 7b zeigt hingegen eine weitere Ausführungsform einer erfindungsgemäßen Anordnung 30 einer Datenbrille 1 auf einer Ladeeinrichtung 20, bei der die Nasenauflage 10 keine nicht-leitende Auflagebereiche 11 zwischen den Kontaktbereichen 12 aufweist. Vielmehr ist in dieser Ausführungsform ein einziger Kontaktbereich 12 vorgesehen, der als Nasenauflage 10 fungiert.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen. Die Erfindung ist durch die Ansprüche definiert.

### Bezugszeichenliste

- 1: Datenbrille
- 2: Brillenglas
- 3: Rahmen
- 4: Bügel
- 5: aufladbare Batterie
- 10: Nasenauflage
- 11: Auflagebereiche
- 12: Kontaktbereiche
- 20: Ladeeinrichtung
- 12: Auflagebereiche
- 21: Standfuß
- 22: Auflagebereiche
- 23: Ladekontakte
- 24: Brückenelement
- 30: Anordnung

## Patentansprüche

1. Datenbrille (1) zum Anzeigen eines virtuellen Bildes im Sichtfeld eines Nutzers, umfassend mindestens einen elektrischen Energiespeicher (5) zur elektrischen Stromversorgung der Datenbrille (1), ein oder mehrere mit dem Energiespeicher (5) verbundene elektrisch leitende Kontaktbereiche (12) zur Kontaktierung mit einer Ladeeinrichtung (20), mindestens eine Nasenauflage (10) mit ein oder mehreren nicht-leitenden Auflagebereichen (11) zur Abstützung der Datenbrille (1) auf einer Nase des Nutzers, wobei die Kontaktbereiche (12) auf der Nasenauflage (10) angeordnet sind, wobei die nicht-leitenden Auflagebereiche (11) relativ zu den elektrisch leitenden Kontaktbereichen (12) hervorstehend ausgebildet sind.

2. Datenbrille (1) nach Anspruch 1, **dadurch gekennzeichnet, dass** die Auflagebereiche (11) mindestens um 0,2 mm, vorzugsweise um 0,5 mm, relativ zu den Kontaktbereichen (12) hervorstehen.

3. Datenbrille (1) nach Anspruch 1 oder 2, **dadurch gekennzeichnet, dass** die Kontaktbereiche (12) voneinander beabstandet und durch die Auflagebereiche (11) voneinander getrennt sind.

4. Datenbrille (1) nach einem der vorhergehenden Ansprüche, **dadurch gekennzeichnet, dass** die Auflagebereiche (11) eckig, vorzugsweise sechseckig, weiter vorzugsweise wabenförmig, ausgebildet sind und die Kontaktbereiche (12) in den Zwischenräumen angeordnet sind.

5. Datenbrille (1) nach einem der vorhergehenden Ansprüche, **dadurch gekennzeichnet, dass** die Auflagebereiche (11) aus Kunststoff, vorzugsweise Silikon, und die Kontaktbereiche (12) aus Kupfer, Silber oder Gold bestehen.

6. Datenbrille (1) nach einem der vorhergehenden Ansprüche, **dadurch gekennzeichnet, dass** der Abstand der Kontaktbereiche (12) zueinander mindestens 0,2 mm, vorzugsweise mindestens 0,5 mm, umfasst und/oder die Auflagebereiche (11) zwischen den Kontaktbereichen (12) eine Breite von maximal 1,5 mm, vorzugsweise1 mm, umfassen.

7. Datenbrille (1) nach einem der vorhergehenden Ansprüche, **dadurch gekennzeichnet, dass** die Kontaktbereiche (12) biegbar sind und sich bei Kontaktierung orthogonal zur Kontaktfläche verbiegen.

8. Anordnung (30) mit einer Datenbrille (1) gemäß der Ansprüche 1 - 7 und einer Ladeeinrichtung (20) zur konduktiven Aufladung einer Datenbrille (1), umfassend:
eine Anlagefläche (22) zur Aufnahme einer Nasenauflage der Datenbrille (1), elektrisch leitende Ladekontakte (23) zur Kontaktierung der Kontaktbereiche (12) der Datenbrille (1), wobei die Ladekontakte (23) auf der Anlagefläche (22) angeordnet sind, wobei die Ladekontakte (23) relativ zur Anlagefläche (22) hervorstehend ausgebildet sind.

9. Anordnung (30) nach Anspruch 8, **dadurch gekennzeichnet, dass** die Ladekontakte (23) zueinander beabstandet und durch die Anlagefläche (22) getrennt angeordnet sind, wobei der Abstand der Ladekontakte (23) zueinander höchstens 0,5 mm, vorzugsweise 3 mm, und/oder die Breite der Anlagefläche (22) zwischen den Ladekontakten (23) maximal 0,5 mm, vorzugsweise 3 mm, umfasst..

10. Anordnung (30) nach Anspruch 8 oder 9, **dadurch gekennzeichnet, dass** die Anzahl der Ladekontakte (23) größer ist als die Anzahl der Kontaktbereiche (12) der Datenbrille (1).

11. Anordnung (30) nach einem der Ansprüche 8 bis 10, **dadurch gekennzeichnet, dass** die Querschnittsfläche der Ladekontakte (23) kleiner ist als die Fläche der Kontaktbereiche (12) der Datenbrille (1).

12. Anordnung (30) nach einem der Ansprüche 8 - 11, **dadurch gekennzeichnet, dass** der Abstand der Ladekontakte (23) kleiner ist als der Abstand der Kontaktbereiche (12) der Datenbrille (1).

13. Anordnung (30) nach einem der Ansprüche 8 - 12, **dadurch gekennzeichnet, dass** die Höhe der herausragenden Ladekontakte (23), vorzugsweise um 0,1 mm bis 0,9 mm, größer ist als die Höhe der herausragenden Auflagebereiche (11) der Datenbrille (1).

14. Anordnung (30) nach einem der Ansprüche 98 - 13, **dadurch gekennzeichnet, dass** die Anlagefläche (23) der Ladeeinrichtung (20) eine zur Nasenauflage (10) der Datenbrille (1) formkomplementäre Fläche umfasst.

## Claims

1. Data glasses (1) for displaying a virtual image in the field of view of a user, comprising at least one electrical energy store (5) for supplying the data glasses (1) with electric power, one or more electrically conductive contact areas (12) connected to the energy store (5) for contacting with a charging device (20), at least one nose pad (10) with one or more non-conductive support areas (11) for supporting the data glasses (1) on a nose of the user, wherein the contact areas (12) are arranged on the nose pad (10), wherein the non-conductive support areas (11) are configured to protrude relative to the electrically conductive contact areas (12).

2. Data glasses (1) according to claim 1, **characterized in that** the support areas (11) protrude relative to the contact areas (12) by at least 0.2 mm, preferably by 0.5 mm.

3. Data glasses (1) according to claim 1 or 2, **characterized in that** the contact areas (12) are spaced apart from one another and separated from one another by the support areas (11).

4. Data glasses (1) according to one of the preceding claims, **characterized in that** the support areas (11) are configured to be angular, preferably hexagonal, further preferably honeycomb-shaped, and the contact areas (12) are arranged in the interspaces.

5. Data glasses (1) according to one of the preceding claims, **characterized in that** the support areas (11) consist of plastic, preferably silicone, and the contact areas (12) consist of copper, silver or gold.

6. Data glasses (1) according to one of the preceding claims, **characterized in that** the distance between the contact areas (12) relative to one another comprises at least 0.2 mm, preferably at least 0.5 mm, and/or the support areas (11) between the contact areas (12) comprise a width of at most 1.5 mm, preferably 1 mm.

7. Data glasses (1) according to one of the preceding claims, **characterized in that** the contact areas (12) are bendable and bend orthogonally to the contact surface upon contacting.

8. Arrangement (30) comprising data glasses (1) according to claims 1 to 7 and a charging device (20) for conductively charging data glasses (1), comprising: an abutment surface (22) for receiving a nose pad of the data glasses (1), electrically conductive charging contacts (23) for contacting the contact areas (12) of the data glasses (1), wherein the charging contacts (23) are arranged on the abutment surface (22), wherein the charging contacts (23) are configured to protrude relative to the abutment surface (22).

9. Arrangement (30) according to claim 8, **characterized in that** the charging contacts (23) are arranged spaced apart from one another and separated by the abutment surface (22), wherein the distance between the charging contacts (23) relative to one another comprises at most 0.5 mm, preferably 3 mm, and/or the width of the abutment surface (22) between the charging contacts (23) comprises at most 0.5 mm, preferably 3 mm.

10. Arrangement (30) according to claim 8 or 9, **characterized in that** the number of charging contacts (23) is greater than the number of contact areas (12) of the data glasses (1).

11. Arrangement (30) according to one of claims 8 to 10, **characterized in that** the cross-sectional area of the charging contacts (23) is smaller than the area of the contact areas (12) of the data glasses (1).

12. Arrangement (30) according to one of claims 8 to 11, **characterized in that** the distance between the charging contacts (23) is smaller than the distance between the contact areas (12) of the data glasses (1).

13. Arrangement (30) according to one of claims 8 to 12, **characterized in that** the height of the protruding charging contacts (23) is greater, preferably by 0.1 mm to 0.9 mm, than the height of the protruding support areas (11) of the data glasses (1).

14. Arrangement (30) according to one of claims 8 to 13, **characterized in that** the abutment surface (23) of the charging device (20) comprises a surface that is form-complementary to the nose pad (10) of the data glasses (1).

## Revendications

1. Lunettes de données (1) pour afficher une image virtuelle dans le champ de vision d'un utilisateur, comprenant au moins un accumulateur d'énergie électrique (5) pour l'alimentation électrique des lunettes de données (1), une ou plusieurs zones de contact électriquement conductrices (12) reliées à l'accumulateur d'énergie (5) pour la mise en contact avec un dispositif de charge (20), au moins un appui nasal (10) avec une ou plusieurs zones d'appui non conductrices (11) pour soutenir les lunettes de données (1) sur un nez de l'utilisateur, dans lesquelles les zones de contact (12) sont disposées sur l'appui nasal (10), dans lesquelles les zones d'appui non conductrices (11) sont réalisées de manière à faire saillie par rapport aux zones de contact électriquement conductrices (12).

2. Lunettes de données (1) selon la revendication 1, **caractérisées en ce que** les zones d'appui (11) font saillie par rapport aux zones de contact (12) d'au moins 0,2 mm, de préférence de 0,5 mm.

3. Lunettes de données (1) selon la revendication 1 ou 2, **caractérisées en ce que** les zones de contact (12) sont espacées les unes des autres et séparées les unes des autres par les zones d'appui (11).

4. Lunettes de données (1) selon l'une des revendications précédentes, **caractérisées en ce que** les zones d'appui (11) sont réalisées de forme angulaire, de préférence hexagonale, plus préférablement en forme de nid d'abeille, et les zones de contact (12) sont disposées dans les espaces intermédiaires.

5. Lunettes de données (1) selon l'une des revendications précédentes, **caractérisées en ce que** les zones d'appui (11) sont constituées de matière plastique, de préférence de silicone, et les zones de contact (12) sont constituées de cuivre, d'argent ou d'or.

6. Lunettes de données (1) selon l'une des revendications précédentes, **caractérisées en ce que** la distance entre les zones de contact (12) les unes par rapport aux autres comprend au moins 0,2 mm, de préférence au moins 0,5 mm, et/ou les zones d'appui (11) entre les zones de contact (12) comprennent une largeur d'au maximum 1,5 mm, de préférence 1 mm.

7. Lunettes de données (1) selon l'une des revendications précédentes, **caractérisées en ce que** les zones de contact (12) sont flexibles et se déforment orthogonalement à la surface de contact lors de la mise en contact.

8. Ensemble (30) comprenant des lunettes de données (1) selon les revendications 1 à 7 et un dispositif de charge (20) pour la charge conductive de lunettes de données (1), comprenant : une surface d'appui (22) pour recevoir un appui nasal des lunettes de données (1), des contacts de charge électriquement conducteurs (23) pour la mise en contact des zones de contact (12) des lunettes de données (1), dans lequel les contacts de charge (23) sont disposés sur la surface d'appui (22), dans lequel les contacts de charge (23) sont réalisés de manière à faire saillie par rapport à la surface d'appui (22).

9. Ensemble (30) selon la revendication 8, **caractérisé en ce que** les contacts de charge (23) sont disposés espacés les uns des autres et séparés par la surface d'appui (22), dans lequel la distance entre les contacts de charge (23) les uns par rapport aux autres comprend au maximum 0,5 mm, de préférence 3 mm, et/ou la largeur de la surface d'appui (22) entre les contacts de charge (23) comprend au maximum 0,5 mm, de préférence 3 mm.

10. Ensemble (30) selon la revendication 8 ou 9, **caractérisé en ce que** le nombre de contacts de charge (23) est supérieur au nombre de zones de contact (12) des lunettes de données (1).

11. Ensemble (30) selon l'une des revendications 8 à 10, **caractérisé en ce que** la surface de section transversale des contacts de charge (23) est inférieure à la surface des zones de contact (12) des lunettes de données (1).

12. Ensemble (30) selon l'une des revendications 8 à 11, **caractérisé en ce que** la distance des contacts de charge (23) est inférieure à la distance des zones de contact (12) des lunettes de données (1).

13. Ensemble (30) selon l'une des revendications 8 à 12, **caractérisé en ce que** la hauteur des contacts de charge saillants (23) est supérieure, de préférence de 0,1 mm à 0,9 mm, à la hauteur des zones d'appui saillantes (11) des lunettes de données (1).

14. Ensemble (30) selon l'une des revendications 8 à 13, **caractérisé en ce que** la surface d'appui (23) du dispositif de charge (20) comprend une surface de forme complémentaire à l'appui nasal (10) des lunettes de données (1).
